# EUROPEAN PATENT SPECIFICATION

(11) **EP 3 984 117 B1**
(45) Date of publication and mention of the grant of the patent: **11.02.2026**
(21) Application number: 19752750.0
(22) Date of filing: 14.06.2019
(51) Int. Cl.: H02K 7/02, H02K 7/09

(54) **DYNAMIC ENERGY STORAGE DEVICE**
DYNAMISCHES ENERGIESPEICHERGERÄT
DISPOSITIF DE STOCKAGE D'ÉNERGIE DYNAMIQUE

(43) Date of publication of application: 20.04.2022
(73) Proprietor: ARTINNOVA S.R.L., 38121 Trento (TN) (IT)
(72) Inventor: DEPPIERI, Francesco, 38122 Trento (TN) (IT); FARAON, Sandro, 38122 Trento (TN) (IT); SESSO, Daniele, 38122 Trento (TN) (IT); FAGHERAZZI, Ivo, 38122 Trento (TN) (IT)
(74) Representative: Muraro, Alfeo Federico
(86) International application number: PCT/IT2019/000049
(87) International publication number: WO 2020/250253

(56) References cited:
- WO-A1-2019/076419
- DE-A1- 19 509 628
- US-A1- 2003 192 449
- US-A1- 2008 122 308
- US-A1- 2014 199 179
- US-B1- 6 630 761

## Description

### Technical field

The present invention is generally applicable to the technical field of the energy storage. In particular, the object of the invention is a dynamic energy-storage device.

### State of the art

In the last decades, the increasing need for energy in many sectors of the human activity led to the constant search for efficient methods for reasonably use of the energy produced by power plants.

To that end, dynamic storage systems of mechanical-kinetic kind exist and are known in which, typically, the energy is stored in the form of rotational mechanical energy of a rotor that is rotatable in a stator. These mechanical systems offer peculiar features in terms of storing, use and lifetime, rendering them particularly suited to be used in industrial fields where, typically, there is the need for very high powers for short periods of time. In fact, the kinetic storage allows to storage a relatively high amount of energy and to quickly return such energy at a high power.

However, the above mentioned storage systems have such costs that they turn out to be unsuited to be used in other fields, for example domestic fields.

The high costs derive form several factors, among which the most significant are the need for managing high powers, the need for stabilizing and managing the motion of the masses, and the high cost of the systems for suspending the rotor and limiting the friction. Other non-negligible factors are the cost of the safety devices, that are needed in the above mentioned storage systems due to the high energy at stake, and also the cost of the materials, that are required to have extreme mechanical properties.

At present, the devices that are most common in the market and that allow to minimize the frictions are of dynamic kind, in which a rotor is suspended to a stator through cooled superconductors and through a system of magnetic bearings.

For the dynamic devices of the kind just mentioned, the well-known Earnshaw theorem applies. A corollary of the theorem states that a system of stationary magnets, including the above mentioned magnetic bearings systems, can't have any stable-equilibrium configuration, hence it always tends to instability.

Clearly, due to the theorem just mentioned, it is impossible to stabilize the rotor in the above mentioned dynamic storage devices merely by making use of permanent magnets: in fact, due to the high rotational regime of the rotor, the instability that would arise would render the device unusable. For that reason, in a dynamic storage device of known kind the magnetic suspension of the rotor is obtained by using, possibly in combination with permanent magnets, electromagnets that are actively controlled by electronic systems that identify and suppress instability by generating suitable stabilizing magnetic forces.

The above mentioned active-control systems have the drawback that they need a constant power supply, that brings significant operating costs, also due to the necessary redundancy that such systems must implement.

Document US 2003/192449 A1 discloses a levitated kinetic energy storage device comprising a rotor having vertical axis.

Document US 2014/199179 A1 discloses a magnetic suspension of a rotor having horizontal axis, the suspension comprising coils for stabilizing the rotor according to the horizontal axis.

Document WO 2019/076419 A1 discloses a flywheel system comprising a rotor with vertical axis.

Document US2008122308A1 discloses a flywheel system with permanent magnets.

### Presentation of the invention

The present invention intends to overcome at least in part the drawbacks of the above mentioned prior art.

In particular, it is an aim of the invention to provide a dynamic energy-storage device that has a lower cost compared to that of the dynamic storage devices of known kind.

A further aim of the invention is to provide a dynamic storage device allowing to achieve an optimal control on the rotational and translational speed of the system.

Last but not least, it is another aim to provide a dynamic storage device structurally simple, that can be manufactured through the usual and known plants.

The above mentioned aims are achieved by a dynamic storage device according to the main claim.

Further details of the invention are specified in the respective dependent claims.

Advantageously, due to its limited cost the storage system of the invention is particularly suited for domestic storage uses and, potentially, also in other fields of similar energy demand.

The aforementioned aims and advantages, together with further of them hereinafter mentioned, will be made apparent from the following description of some preferred embodiments of the invention, that are explained by way of non-limiting examples with reference to the attached drawings.

### Brief description of the drawings

Fig. 1 represents the dynamic storage device of the invention, in lateral cross-sectional view according to a section plane comprising the longitudinal axis.
Fig. 2 schematically represents the configuration of some magnets belonging to the device of Fig. 1, in axonometric view.
Figs. 3 and 4 schematically represent two further configurations of the magnets belonging to the device of Fig. 1, according to respective variant embodiments of the invention, in axonometric view.

### Detailed description of some preferred embodiments

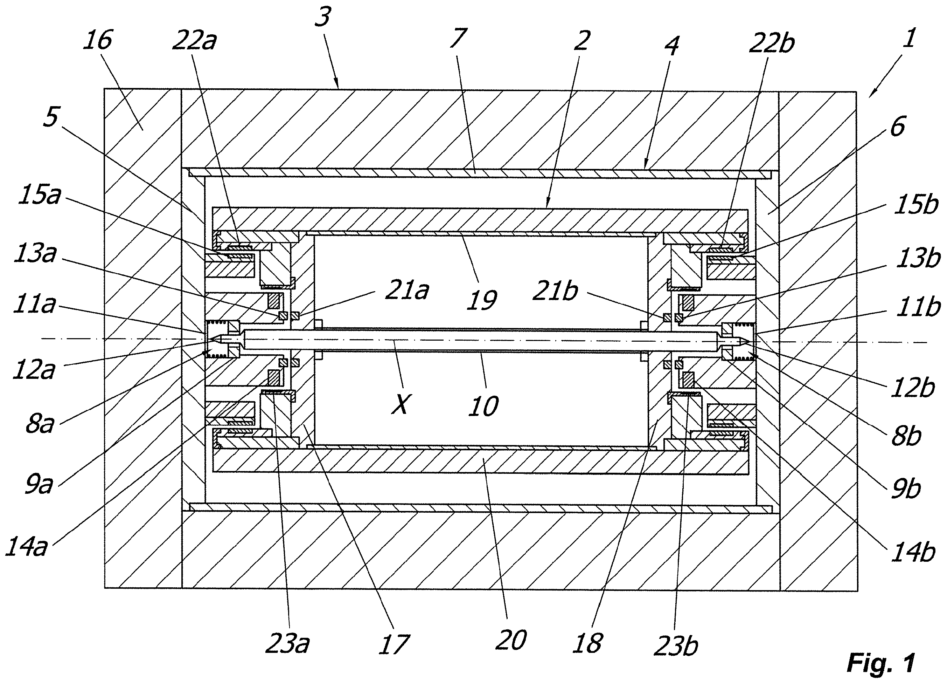

The dynamic storage device of the invention, identified in its entirety in Fig. 1 with **1,** comprises a stator **3** having generally cylindrical shape that defines a longitudinal axis **X,** and a rotor **2,** having a shape that is, as well, generally cylindrical and that is substantially coaxial to the stator.

The rotor **2** is magnetically constrained to the stator **3** through a magnetic suspension system that, besides allowing the rotation of the rotor **2** according to the longitudinal axis **X,** at the same time dynamically stabilizes the rotor **2** during its rotation around the longitudinal axis **X.**

The device **1** is configured to operate with the longitudinal axis **X** arranged horizontally. Therefore, the following description shall be construed with implicit reference to an operating condition in which the longitudinal axis **X** has horizontal orientation.

Moreover, hereinafter in the description it will be assumed that, at least in normal operating conditions, the rotation axis of the rotor **2** coincides with the longitudinal axis **X.** In fact, despite the fact that the rotational constraint of the rotor **2** to the stator **3** is magnetic, thus the position of the rotor **2** with respect to the longitudinal axis **X** is subjected to small oscillations in a direction orthogonal to the longitudinal axis **X,** nevertheless, the above oscillations are, in practice, entirely negligible.

The above mentioned magnetic suspension system comprises first magnetic means **15a, 15b, 22a, 22b** to magnetically constraining the rotor **2** to the stator **3** according to a direction that is orthogonal to the longitudinal axis **X.** In particular, the first magnetic means **15a, 15b, 22a, 22b** are configured so that their mutual interaction generates, in its whole, a sustaining force on the rotor **2** that is substantially orthogonal to the longitudinal axis **X,** and that is suited to compensate the weight of the rotor **2** during its rotation around the same axis so as to sustain it.

The magnetic suspension system also comprises second magnetic means **13a, 13b, 21a, 21b** to magnetically constrain the rotor **2** to the stator **3** according to the direction of the longitudinal axis **X,** allowing it a limited axial movement. In particular, the second magnetic means **13a, 13b, 21a, 21b** are configured so that their mutual interaction generates, in its whole, a stabilizing force on the rotor **2** that is substantially parallel to the longitudinal axis **X,** i.e. horizontal in operating conditions.

Both the above mentioned sustaining and stabilizing forces constantly operate to prevent the contact between the rotor **2** and the stator **3.** Nevertheless, the two above mentioned forces have mutually different features, as will be explained more in detail hereinafter.

In particular, the first magnetic means **15a, 15b, 22a, 22b** are configured so that the sustaining force defines, for the rotor **2,** a position of stability in a direction orthogonal to the longitudinal axis **X.** The above mentioned position of stability coincides with the particular position of the rotor in which the module of the sustaining force has a value that coincides with the weight of the rotor. The above mentioned position is made stable due to the fact that the sustaining force increases, or respectively decreases, compared to the above mentioned value, as a consequence of the movement of rotor below, or respectively above, the position of stability, so as to exert on the rotor **2** a feedback tending to bring it back to the position of stability.

In the normal operating conditions, the sustaining force is constantly directed upwards. Moreover, the sustaining force remains preferably constant, or substantially constant, during each rotation of the rotor around the longitudinal axis **X.** It is hereby specified that the wording "a rotation" is to be construed to indicate a 360° turn of the rotor **2** around the longitudinal axis **X.** Moreover, the wording "substantially costant" referred to the sustaining force is to be construed to indicate that the changes in the force during each rotation of the rotor are negligible compared to the mean value of the same force, and, anyway, those changes do not induce instability in the motion of the rotor.

Concerning the second magnetic means **13a, 13b, 21a, 21b,** they comprise a plurality of first permanent magnets **13a, 13b** belonging to the stator **3** and a plurality of third permanent magnets **21a, 21b** belonging to the rotor **2.** In particular, the above mentioned first permanent magnets **13a, 13b** and third permanent magnets **21a, 21b** are configured so that the stabilizing force is subject to a cyclical inversion of its direction during each rotation of the rotor **2** around the longitudinal axis **X.**

It can be noticed that the stabilizing force does not define, for the rotor **2,** a stability position in the strict sense: in fact, in operating conditions that force is subject to continuous inversion of its direction as a consequence of the rotation of the rotor, hence it imparts an oscillatory motion on the rotor **2** according to the longitudinal axis **X,** yet having limited entity and high frequency. Nevertheless, it is precisely the above variability of the force that allows to reach a condition of dynamic stability for the rotor **2.** The reason of that dynamic stability is to be found in the fact that the variability of the stabilizing force allows to overcome the limitation posed by the aforementioned Earnshaw theorem, that is applicable only to the case of stationary magnetic forces.

It it hence possible to constrain the rotor **2** to the stator **3** exclusively through the use of permanent magnets, i.e. in a passive way, at the same time avoiding instability. Therefore, it is reached the aim of reducing the cost of the dynamic energy-storage device compared to the devices of known kind. In fact, the cost of a passive system based on permanent magnets is lower than that of an active system based on electromagnets, both because the permanent magnets themselves have a lower cost compared to the electromagnets, and because they don't require a control system analogous of that which is needed for the electromagnets.

As a consequence, advantageously, the above mentioned device **1** is particularly suited to be used in the application field of domestic storing, as well as in other fields of similar energy demand.

Preferably, the stator **3** is provided with two first flanges **5, 6** that are arranged mutually facing according to the direction of the longitudinal axis **X,** to which the first permanent magnets **13a, 13b** belong. Similarly, the rotor **2** is provided with two second flanges **17, 18** to which the third permanent magnets **21a, 21b** belong, and configured so that each one of them faces a corresponding one of the above mentioned first flanges **5, 6** during rotation of the rotor **2.**

Preferably, at least a part **13a** of the first permanent magnets belongs to a corresponding first flange **5** and at least a part **21a** of the third permanent magnets belongs to the second flange **17** facing to the above mentioned first flange **5,** so that the above mentioned permanent magnets **13a, 21a** are mutually facing in order to magnetically interact with one another.

Still preferably, the first permanent magnets **13a** and the third permanent magnets **21a** just mentioned are configured in such a way that the overall magnetic force between the first flange **5** and the second flange **17** generated by the mutual interaction between the above mentioned magnets **13a, 21a** is repulsive during a first portion of each rotation of the rotor **2,** and attractive during a second portion of the above mentioned rotation.

Still preferably, the above mentioned permanent magnets **13a** and **21a** are so configured as such to define a succession of several first portions and second portions of the kind above described, in order to obtain a succession of inversions of the above mentioned overall force between the two flanges **5** and **17** during each rotation of the rotor **2.**

Preferably, a remaining part of the first permanent magnets **13b** and a remaining part of the third permanent magnets **21b** belong to the other first flange **6** and to the other second flange **18,** respectively. Still preferably, the configuration of the latter permanent magnets **13b, 21b** is similar to that of the permanent magnets **13a, 21a** above described. Still preferably, these latter permanent magnets **13b, 21b** are angularly displaced with respect to the permanent magnets **13a, 21a** in such a way that, for any angular position of the rotor **2,** their mutual magnetic interaction generates, between flange **5** and flange **17,** an overall force that is opposite to the force generated between flange **6** and flange **18.** What has been just described is to be construed as meaning that, if, for a given angular position of the rotor **2,** the force acting between flanges **5** and **17** is attractive, the force acting between the flanges **6** and **18** is repulsive, and vice-versa.

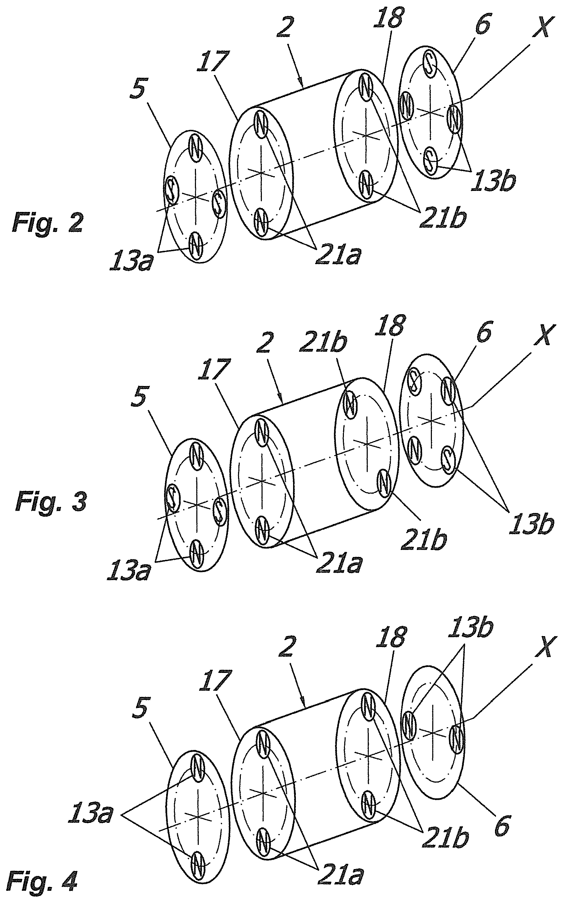

Fig. 2 represents a possible configuration of the first permanent magnets **13a, 13b** and third permanent magnets **21a, 21b** in the embodiment just described. For the sake of simplicity, that figure only shows the parts of rotor **2** and of stator **3** that support the above mentioned magnets **13a, 13b** and **21a, 21b.** In particular, for the stator **3,** only the surfaces of the first flanges **5, 6** facing to the rotor **2** are represented, while the rotor **2** is represented in a simplified way as a cylinder that is delimited at the opposite ends by the surfaces of the second flanges **17, 18.** Fig. 2 only represents the mutually-interacting magnetic polarities belonging to magnets **13a, 13b, 21a, 21b,** hence it is not intended to limit in any way the actual geometrical configuration of the magnets themselves.

Preferably, the arrangement of the first permanent magnets **13a, 13b** is such as to define, on each first flange **5, 6,** corresponding successions of alternate polarities, that are arranged according to corresponding annuli and at uniform angular intervals around the longitudinal axis **X.** The above mentioned annuli are represented in Fig. 2 by dash-dot lines. Similarly, the third permanent magnets **21a, 21b** are arranged on each of the second flanges **17, 18** so as to define corresponding successions of same polarities arranged according to corresponding annuli at uniform angular intervals around the longitudinal axis **X.** Preferably, the angular intervals of the annuli of the second flanges **17, 18** are twice as wide as the angular intervals of the annuli of the first flanges **5, 6.** Still preferably, the polarities of the annulus of the first flange **5** are angularly displaced with respect of those of the annulus of the other first flange **6** by an angle equal to the angular interval between two successive polarities in the same annulus, while, on the other hand, the polarities of the annuli of the two second flanges **17, 18** are mutually in phase. This means that, each polarity belonging to the annulus of the first flange **5** is aligned with a polarity of opposite sign belonging to the annulus of the other first flange **6,** according to the direction of the longitudinal axis **X,** while the polarities belonging to the annuli o the two second flanges **17, 18** are mutually aligned according to the longitudinal axis **X.** Accordingly, when magnets **13a, 21a** belonging to the two flanges **5-17** are aligned so as to mutually repel, the magnets **13b, 21b** belonging to the other two flanges **6-18** are aligned so as to mutually attract, and vice-versa, as it may be clearly seen in Fig. 2.

In a variant of the above mentioned embodiment, the third permanent magnets **21a** define a succession of alternate polarities arranged at uniform angular intervals along an annulus that is coaxial to the longitudinal axis **X,** while the first permanent magnets **13a** define a succession of polarities having the same sign, arranged at uniform angular intervals along an annulus coaxial to axis **X,** the angular intervals being twice as wide as the intervals in the annulus defined by the third permanent magnets **21a.**

In a third variant of the above mentioned embodiment, each succession of the first permanent magnets **13a** and of the third permanent magnets **21a** is arranged according to a respective annuli and with polarities in alternate succession.

The three variant embodiments just described are those that allow, advantageously, to achieve the better stability of the rotor **2.** Nevertheless, the advantages of the invention can be achieved through further variant embodiments.

One of the above further variants, schematically represented in Fig. 3, is identical to the first variant above described, except that the polarities of the two second flanges **17, 18** are mutually angularly displaced by a predefined displacement angle. Preferably, the polarities between the two first flanges **5, 6** are displaced by an angle equal to the sum of the displacement of the previous variant and the above mentioned displacement angle. In such a way, it is possible to achieve the same effect of simultaneous attraction on one side of the rotor, and repulsion on the other side, as described in the previous variant embodiment.

According to a further variant embodiment of the invention, the magnets are configured so that the interaction between each of the flange pairs **5-17** and **6-18** during each rotation of the rotor **2** are all repulsive, or all attractive. In this variant embodiment, an example of which is depicted in Fig. 4, the condition of cyclical inversion of the stabilizing force can be achieved by arranging the permanent magnets **13a, 21a** of the flange pair **5-17** so that they are angularly displaced with respect to the permanent magnets **13b, 21b** of the other flange pair **6-18** so that, during each rotation of the rotor **2,** the forces act, in alternative succession, between the flanges **5-17** or between the flanges **6-18.**

A different embodiment of the invention differs from the previous one in that the first permanent magnets **13a** and the third permanent magnets **21a** are provided only on the flange pair **5-17,** while the said magnets are absent in the flanges **6-18** of the other pair. In this latter embodiment, the cyclical inversion of the stabilizing force can be achieved by arranging the first permanent magnets **13a** and/or the third permanent magnets **21a** according to an annulus around the longitudinal axis **X** so as to define corresponding successions of polarities having alternate signs.

In a first variant of this second embodiment, the first permanent magnets **13a** can be arranged so as to define a succession of polarities having alternate signs, arranged at uniform angular intervals along an annulus that is coaxial to the longitudinal axis **X,** while the third permanent magnets **21a** can be arranged so as to define a succession of polarities having the same sign at uniform angular intervals along an annulus coaxial to the axis **X,** the latter intervals being twice as width compared to the intervals of the annulus formed by the first permanent magnets **13a.**

The configuration just described is similar to that depicted in Fig. 2, when only the magnets **13a, 21a** of the flange pair **5-17** are taken into consideration and the magnets **13b, 21b** of the other flange pairs **6-18** are ignored, since, as above mentioned, the latter magnets are absent in this embodiment.

In the above described variant embodiments, the permanent magnets **13a-21a** and **13b-21b** belonging to each pair of mutually facing flanges **5-17** and **6-18** are arranged so that the corresponding poles define, on the two flanges of the pair, two respective annuli around the longitudinal axis **X,** the two annuli being arranged mutually facing according to the direction of the axis **X,** and having substantially equal diameters.

Anyway, a variant embodiment of the invention may envisage that the permanent magnets belonging to the two flanges of a pair, or of each pair, are arranged so that the corresponding poles define two or more of the above mentioned annuli, the annuli having mutually different diameters.

Clearly, the variants and the embodiments above described can be combined in order to achieve the cyclical inversion of the stabilizing force.

It is also clear that the number of first magnets **13a, 13b** and third magnets **21a, 21b** indicated in Figs. 2-4 is purely exemplary, and that, in variant embodiments of the invention, can be any number.

Preferably, in all of the variant embodiments above described, each of the first permanent magnets **13a, 13b** and third permanent magnets **21a, 21b** is arranged so that their two poles are aligned according to a direction parallel to the longitudinal axis **X.** Advantageously, the configuration just described allows to achieve a stabilizing force having a particularly precise orientation according to the longitudinal axis **X,** in order to avoid unwanted oscillations of the rotor **2.**

Still preferably, each of the first permanent magnets **13a, 13b** and third permanent magnets **21a, 21b** is a corresponding bar that develops with uniform cross section, e.g. circular, according to a direction parallel to the longitudinal axis **X.**

Concerning in more detail the stator **3,** preferably it comprises an inert containment casing **4** that, in turn, comprises a tubular metallic shell **7** whose ends are sealingly associated to, respectively, the two first flanges **5, 6.**

Still preferably, the above mentioned containment casing **4** comprises a first outer layer **16** made in massive material arranged outside of the tubular metallic shell **7** and that, advantageously, allows to achieve a restraint on the movement of the rotor **2** in case of breakdown.

Still preferably, the first outer layer **16** and the tubular metallic shell **7** define a gap containing a substance, such as for example viscous oil or sand, that, in case of breakdown, can penetrate in the sealed chamber so as to contribute dissipating the kinetic energy of the rotor **2.** The cases in which this may occur comprise possible extreme instability, e.g. earthquakes, impact damages, etc., as well as system breaking due to possible manufacturing defects.

Concerning in more detail the first flanges **5, 6** of the stator **3,** preferably they have corresponding holes **8a, 8b** in which respective safety bearings **9a, 9b** are housed that are provided with corresponding seats. Moreover, the rotor **2** comprises two end portions **12a, 12b** that are mutually opposite according to the direction of the longitudinal axis **X** and are coaxial thereto. The end portions **12a, 12b** are housed with play, respectively, in the above mentioned seats so as to avoid contact between the end portions **12a, 12b** and the seats in the normal operating conditions of the device **1,** thus preventing also the consequent friction. The above mentioned contact may occasionally occur during an instability event and/or during transients - acceleration and deceleration - of the rotor **2,** thus advantageously limiting the misalignment of the rotor **2** so as to prevent contact between the rotor **2** and the stator **3,** that would consequently cause damages to the device **1.**

Still preferably, the above mentioned end portions **12a, 12b** have corresponding sharped ends. Moreover, the holes **8a, 8b** of the stator **3** house corresponding safety capsules **11a, 11b** in which the above mentioned sharp ends may stick in case of excessive displacement of the rotor **2** with respect of the stator **3** that may follow serious instability events. Advantageously, when one of the sharp ends sticks in the corresponding safety capsule **11a, 11b,** it establishes a mechanical constraint between the rotor **2** and the stator **3,** that is suited to reduce the number of degrees of freedom of the rotor itself, in order to enhance the containment action of the safety bearings **9a, 9b so** as to prevent potentially disruptive circumstances.

Concerning in more detail the rotor **2,** preferably it comprises a cylindrical connecting tube **19** whose ends are associated, respectively, to the second flanges **17, 18.**

Still preferably, the rotor **2** comprises a covering **20** in composite material that increases the peripheral mass and the energy storing capacity of the rotor **2,** as well as its mechanical strength to centrifugal stress.

Preferably, the rotor **2** is further covered with an outer shell in fiberglass.

Still preferably, the rotor **2** comprises a shaft **10** whose main function is to carry, at its corresponding ends, the above mentioned end portions **12a, 12b.** The shaft **10** is not subjected to a noticeable kinetic mechanical stress, hence it may be made in steel alloy.

On the contrary, the second flanges **17, 18** of the rotor **2** are subjected to high mechanical stress, mainly cause by centrifugal forces, therefore their dimensions and materials shall be defined based on the rotational speed of the system, hence on the required energy storing capacity. A material that is typically employed for the second flanges **17, 18** is the aluminum alloy known as Ergal.

Concerning the first magnetic means **15a, 15b, 22a, 22b** originating the sustaining force, preferably they define a first ring **15a, 15b** belonging to the stator **3** and being coaxial to the longitudinal axis **X,** and a second ring **22a, 22b** belonging to the rotor **2** and concentric to the first ring. The two rings are configured in such a way that their corresponding mutually facing surfaces have the same magnetic polarities, so that the mutual interaction between the two rings is always repulsive in any of their angular positions. Moreover, the first ring comprises a plurality of portions having the same angular widths that exert, on the second ring, respective magnetic forces having mutually different magnitudes, so that the resulting overall force between the two rings compensate for the weight of the rotor **2** when the longitudinal axis **X** is arranged horizontally.

Preferably, the first ring is defined by a plurality of second permanent magnets **15a, 15b** belonging to the two first flanges **5, 6** of the stator **3,** arranged around the longitudinal axis **X,** preferably at uniform angular intervals. Similarly, the second ring is preferably defined by a plurality of fourth permanent magnets **22a, 22b** belonging to the two second flanges **17, 18** of the rotor **2,** and arranged at uniform angular intervals around the longitudinal axis **X.**

Preferably, the magnetic forces produced by the second permanent magnets **15a, 15b** have mutually different magnitudes, i.e. bigger for the magnets arranged at the base of the first ring and smaller for the magnets arranged on top of the first ring. According to a variant embodiment, the forces of the second permanent magnets **15a, 15b** have all the same magnitudes, but the magnets are arranged at nonuniform angular intervals around the longitudinal axis **X,** that are narrower at the base of the first ring and wider towards its top.

On the contrary, the magnetic forces of all of the fourth permanent magnets **22a, 22b** have, preferably, the same magnitudes.

Still preferably, the stator **3** comprises a plurality of coils **14a, 14b** to induce the rotary motion on the rotor **2,** arranged in a ring around the longitudinal axis **X,** preferably farther from the axis that with respect to the first permanent magnets **13a, 13b.**

Moreover, the rotor **2** comprises fifth permanent magnets **23a, 23b,** that are also arranged in a succession of alternate polarities around the longitudinal axis **X** to define a ring that is concentric to the ring defined by coils **14a, 14b,** in order to be faced to the above mentioned coils **14a, 14b.** The coils **14a, 14b** are being operated by a control unit, that is not represented in the drawings but that is per se known, so as to interact with the fifth permanent magnets **23a, 23b** to impart the rotation to the rotor **2,** in a way similar as in a brushless motor of known kind.

Preferably, a first group of coils **14a** belongs to the first flange **5** and the remaining group of coils **14b** belongs to the other first flange **6.** Similarly, a first group of fifth permanent magnets **23a** belongs to the second flange **17** and the remaining group **23b** belongs to the other second flange **18.** The control unit is configured to operate each one of the two groups of coils **14a, 14b** differently than the other group, thus allowing, to advantage, the active compensation of possible instabilities on the rotor **2,** in particular during critical conditions such as acceleration, deceleration and possible breakdowns.

Preferably, the device **1** also comprises a detecting device to detect the position of the rotor **2** with respect to the stator **3** according to the longitudinal axis **X,** while the above mentioned control unit is configured to perform the above mentioned differentiated operation two groups of coils **14a, 14b** based on the reading of the detecting device.

Preferably, the detecting device is configured to measure the reluctance induced by the fifth permanent magnets **23a, 23b** on the coils **14a, 14b** during rotation of the rotor **2.** In variant embodiments of the invention, the detecting device may detect the position of rotor **2** through other magnetic and/or optic systems of known kind.

More generally, the geometries of the rotor **2** and/or of the stator **3** are preferably symmetrical according to a plane perpendicular to the longitudinal axis **X.**

Still preferably, all of the permanent magnets **13a, 13b, 15a, 15b, 21a, 21b, 22a, 22b** and the coils **14a, 14b** above described are fixed to the corresponding flanges **5, 6, 17, 18.** More preferably, the above mentioned magnets and coils are housed in corresponding seats made in the above mentioned flanges.

Still preferably, the first flanges **5, 6** of the stator **3** have corresponding central parts projecting towards the rotor **2,** and that house the first permanent magnets **13a, 13b,** the coils **14a, 14b,** and the second permanent magnets **15a, 15b.** On the other hand, the second flanges **17, 18** of the rotor **2** have corresponding central recesses that house the central parts of the first flanges **5, 6,** the third permanent magnets **21a, 21b,** the fourth permanent magnets **22a, 22b,** and the fifth permanent magnets **23a, 23b.**

In particular, the acting poles of the second permanent magnets **15a, 15b** are all oriented towards the outside of the stator **3,** with the consequence that the active poles of the fourth permanent magnets **22a, 22b,** that face the above mentioned poles, are all oriented towards the inside of the rotor **2.** A similar configuration also applies to the coils **14a, 14b** of the stator **3** and the fifth permanent magnets **23a, 23b** of the rotor **2,** respectively.

However, it is clear that, in variant embodiments of the invention not depicted in the drawings, the configuration may be switched with respect to the above description, meaning that the first flanges **5, 6** may have corresponding central recesses in which corresponding central parts of the second flanges **17, 18** are housed.

The device **1** may be associated with further electric, electronic and mechanical system, among with, for example, control systems and energy static-conversion systems, that, for the sake of simplicity, are not described hereby, nor depicted in the drawings, but that are per se known.

For example, the above mentioned systems may comprise an energy static-conversion device from AC to DC, a device for controlling the static conversion, a device for controlling the brushless motor, an energy-withdrawal device for converting kinetic energy into DC electric energy, a device to convert energy from DC to AC, synchronized with the user network, and a device for controlling and managing the whole system, provided with a user interface.

In particular, since the dynamic energy-storage device is intended to be used mainly for domestic consumers, like households, small enterprises, etc., it is necessary to manage the operations of charging, discharging, and retention of the stored energy.

In substance, the different components of energy-conversion management are devoted to manage the withdrawal and the storing of the energy from the AC electric network, through a conversion into DC that is needed by the system, as per any other storing system based on usual batteries.

Practically, the operation of the device comprises a startup phase to bring the, initially stationary, rotor **2** to a rotational regime of "minimum charge", in which the values of the energy parameters for tension, current, frequency, and so on, are sufficient to allow connecting the system to the electric network in energy-exchange regime, and to reach a stable rotational regime for the rotor.

The startup phase is carried out by withdrawing energy from the network through capacitive-charge stages in pulsed regime (PWM).

Afterwards, the energy is withdrawn from the capacitors and transferred to coils **14a, 14b,** so that a torque is imparted to the rotor **2.** The distribution of the torque among the two ends of the rotor **2** also allows to achieve some control of the axial translational motion of the rotor, so as to maintain it in a configuration of equilibrium until reaching the rotational speed required to obtain a passive stability, i.e. without using the controlling action of the coils.

Hence, the system can store energy from generator plants, and transfer the energy to the coils as above explained in order to convert it into kinetic energy of the rotor.

When needed, the kinetic energy is withdrawn from the rotor through the withdrawal device to be converted into DC synchronized with the consumer network.

In the device heretofore described, it has been provided a passive suspension system, which is stabilized dynamically yet passively. In particular, an assembly of permanent magnets induce on the rotor an axially limited oscillation, that is also controlled around a position of equilibrium which, in practice, becomes a stable position.

Therefore, the rotation of the rotor, together with the adoption of the permanent magnets, allow to passively stabilize and suspend the rotor for a wide range of rotational speeds.

At very low speeds, that is during the system startup and turn off, the stability may be achieved either through bearings, or through the intervention of the coils.

It is clear that the above mentioned control devices may cooperate with an active system for suppressing abnormal oscillations that might compromise the system integrity.

From the above description, it is understood that the dynamic energy-storage device reaches the intended aims.

In particular, the use, for the rotor, of a magnetic suspension system of a passive kind, i.e. exclusively based on permanent magnets, allows to provide a dynamic energy storage device having lower cost compared to that of the similar devices of known kind. Consequently, the device of the invention is particularly suited to be used for domestic storing, or for uses that have similar requirements.

At the same time, the above mentioned passive magnetic suspension system, cooperating with the coils for the induction of the motion, distributed on both sides of the stator and operable in a mutually different way, allow to achieve optimal control on the rotational speed and on the translation of the system.

Moreover, the device of the invention employs the same components that are typically used in the dynamic energy storage devices of known kind, hence can be manufactured in a simple way through the usual and known plants.

Moreover, the materials may be chosen based on the requirements, yet without departing from the scope of the invention.

Moreover, one or more elements belonging to a specific embodiment of the invention and technically compatible with another specific embodiment of the invention may be introduced in the latter embodiment in addition to, or in replacement of, elements of the latter embodiment.

Where technical elements specified in the claims are followed by reference signs, those reference signs are included at the sole purpose to improve the understanding of the invention, hence they do not imply any limitation of the scope of protection as claimed.

## Claims

1. Device (1) for the dynamic storing of energy, comprising:
- a stator (3) having a generally cylindrical shape that defines a longitudinal axis (X);
- a rotor (2) magnetically constrained to said stator (3) so as to be rotatable according to said longitudinal axis (X);
- first magnetic means (15a, 15b, 22a, 22b) belonging to said rotor (2) and to said stator (3), configured to magnetically interact with each other so as to generate, in their whole, a sustaining force directed orthogonal to said longitudinal axis (X) to sustain said rotor (2) during its rotation around said longitudinal axis (X) when said longitudinal axis (X) is arranged horizontally;
- second magnetic means (13a, 13b, 21a, 21b) belonging to said rotor (2) and to said stator (3), configured to magnetically interact with each other so as to generate on said rotor (2), in their whole, a stabilizing force parallel to said longitudinal axis (X);
wherein said second magnetic means (13a, 13b, 21a, 21b) comprise a plurality of first permanent magnets (13a, 13b) belonging to said stator (3) and a plurality of third permanent magnets (21a, 21b) belonging to said rotor (2), **characterized in that** said first permanent magnets (13a, 13b) and said third permanent magnets (21a, 21b) being configured in such a way that said stabilizing force is subjected to cyclical inversion during each rotation of said rotor (2) around said longitudinal axis (X).

2. Device (1) according to claim 1, **characterized in that** said stator (3) is provided with two first flanges (5, 6), mutually facing according to the direction of said longitudinal axis (X), said rotor (2) being provided with two second flanges (17, 18) configured so that each one of said two second flanges (17, 18) faces a corresponding one of said first flanges (5, 6) during said rotation of said rotor (2), said first permanent magnets (13a, 13b) belonging to at least one of said two first flanges (5, 6), said third permanent magnets (21a, 21b) belonging to at least one of said two second flanges (17, 18) facing to said at least one of said two first flanges (5, 6).

3. Device (1) according to claim 2, **characterized in that** said first permanent magnets (13a, 13b) and said third permanent magnets (21a, 21b) are configured in such a way that their mutual magnetic interaction generates in its whole a repulsive force between at least one of said two first flanges (5, 6) and the second flange (17, 18) facing said at least one of said two first flanges (5, 6) during at least a corresponding portion of each rotation of said rotor (2).

4. Device (1) according to any claim 2 or 3, **characterized in that** said first permanent magnets (13a, 13b) and said third permanent magnets (21a, 21b) are configured in such a way that their mutual magnetic interaction generates in its whole an attractive force between at least one of said two first flanges (5, 6) and the second flange (17, 18) facing said at least one of said two first flanges (5, 6) during at least a corresponding portion of each rotation of said rotor (2).

5. Device (1) according to claim 2, **characterized in that** said first permanent magnets (13a, 13b) and said third permanent magnets (21a, 21b) are configured in such a way that their mutual magnetic interaction generates in its whole, between at least one of said two first flanges (5, 6) and the second flange (17, 18) facing said at least one of said two first flanges (5, 6), a force that is alternatively repulsive and attractive due to said rotation of said rotor (2).

6. Device (1) according to any claim from 2 to 5, **characterized in that** said first permanent magnets (13a, 13b) and said third permanent magnets (21a, 21b) are configured in such a way that their mutual magnetic interaction generates in its whole, between one of said two first flanges (5, 6) and the second flange (17, 18) facing said one of said two first flanges (5, 6), a force having opposite sign with respect to the overall magnetic force generated between the other one of said two first flanges (5, 6) and the other one of said second flanges (17, 18), for any angle of rotation of said rotor (2).

7. Device (1) according to claim 6, **characterized in that** said first permanent magnets (13a, 13b) define, on each one of said first flanges (5, 6), a corresponding succession of polarities having alternate signs arranged at uniform angular intervals around said longitudinal axis (X) according to a first annulus, and that said third permanent magnets (21a, 21b) of each one of said second flanges (17, 18) define a corresponding succession of polarities having the same sign arranged at uniform angular intervals around said longitudinal axis (X) according to a second annulus, said angular intervals of said second annulus having widths twice as wide as the angular intervals of said first annulus.

8. Device (1) according to any claim from 2 to 7, **characterized in that** said first flanges (5, 6) have corresponding holes (8a, 8b) housing respective safety bearings (9a, 9b) provided with corresponding seats, said rotor (2) comprising two end portions (12a, 12b) mutually opposite according to the direction of said longitudinal axis (X) and coaxial thereto, said end portions (12a, 12b) housed with play in, respectively, said seats in such a way as to prevent said end portions (12a, 12b) from contacting said seats during normal operation of said device (1), at the same time limiting the displacement of said rotor (2) relative to said stator (3), said end portions (12a, 12b) having corresponding sharp ends, in said holes (8a, 8b) being housed corresponding safety capsules (11a, 11b) in which said sharp ends can stick in case of excessive displacement of said rotor (2) relative to said stator (3).

9. Device (1) according to any claim from 2 to 8, **characterized in that** said stator (3) comprises an inert containment casing (4) that, in turn, comprises a tubular metallic shell (7) whose ends are sealingly associated to, respectively, said two first flanges (5, 6), wherein said containment casing (4) comprises a first outer layer (16) made in massive material arranged outside of said tubular metallic shell (7).

10. Device according to claim 9, **characterized in that** said first outer layer (16) and said tubular metallic shell (7) define a gap containing a substance, e.g. viscous oil or sand, suited to dissipate the kinetic energy of said rotor (2) in case of breakdown.

11. Device (1) according to any claim from 2 to 10, **characterized in that** said rotor (2) comprises a cylindrical connecting tube (19) whose ends are associated to, respectively, said two second flanges (17, 18), and a coating (20) in composite material.

12. Device (1) according to any claim from 1 to 11, **characterized in that** said first magnetic means (15a, 15b, 22a, 22b) define:
- a first ring (15a, 15b) belonging to said stator (3) and coaxial to said longitudinal axis (X);
- a second ring (22a, 22b) belonging to said rotor (2) and concentric on said first ring;
the mutually facing surfaces of said first ring and of said second ring having the same magnetic polarities, said first ring comprising a plurality of portions having mutually equal angular widths and exerting, on said second ring, respective magnetic forces having mutually different magnitudes, in such a way that the resulting sustaining force compensates for the weight of said rotor (2) when said longitudinal axis (X) is arranged horizontally.

13. Device (1) according to any claim from 1 to 12, **characterized in that** said stator (3) comprises a plurality of coils (14a, 14b) arranged on a ring around said longitudinal axis (X) for inducing the motion on said rotor (2), said rotor (2) comprising fifth permanent magnets (23a, 23b) arranged on a ring around said longitudinal axis (X) so as to face said coils (14a, 14b) and defining a succession of alternate polarities, said coils (14a, 14b) cooperating with said fifth permanent magnets (23a, 23b) to impart said rotation to said rotor (2).

14. Device (1) according to claim 13, **characterized in that** said device (1) is in accordance to claim 2, **and in that** a first group of said coils (14a) belong to one of said first flanges (5, 6) and the remaining group of said coils (14b) belong to the other one of said first flanges (5, 6), a first group of said fifth permanent magnets (23a) belonging to one of said second flanges (17, 18), the remaining group of said fifth permanent magnets (23b) belonging to the other one of said second flanges (17, 18), a control unit being provided to operating said first group of coils (14a) and said remaining group of coils (14b) in a mutually different way to compensate instability on said rotor (2), said device (1) further comprising a detecting device to detect the position of said rotor (2) with respect to said stator (3) according to said longitudinal axis (X), said control unit being configured to operate said groups of coils (14a, 14b) in mutual different ways based on the reading of said detecting device.

15. Device (1) according to any previous claim, **characterized in that** each one of said first permanent magnets (13a, 13b) and each one of said third permanent magnets (21a, 21b) is arranged in such a way that its two corresponding magnetic poles are mutually aligned according to a direction parallel to said longitudinal axis (X).

## Patentansprüche

1. Vorrichtung (1) zur dynamischen Speicherung von Energie, umfassend:
- einen Stator (3) mit einer im Allgemeinen zylindrischen Form, die eine Längsachse (X) definiert;
- einen Rotor (2), der magnetisch an den besagten Stator (3) befestigt ist, um gemäß der besagten Längsachse (X) drehbar zu sein;
- erste magnetische Mittel (15a, 15b, 22a, 22b), die zum besagten Rotor (2) und zum besagten Stator (3) gehören und derart konfiguriert sind, dass sie magnetisch miteinander interagieren, um insgesamt eine Stützkraft zu erzeugen, die orthogonal zur besagten Längsachse (X) gerichtet ist, um den besagten Rotor (2) während seiner Drehung um die besagte Längsachse (X) zu stützen, wenn die besagte Längsachse (X) horizontal angeordnet ist;
- zweite magnetische Mittel (13a, 13b, 21a, 21b), die zum besagten Rotor (2) und zum besagten Stator (3) gehören und derart konfiguriert sind, dass sie magnetisch miteinander interagieren, um in ihrer Gesamtheit eine Stabilisierungskraft parallel zur besagten Längsachse (X) auf den besagten Rotor (2) zu erzeugen; wobei die besagten zweiten magnetischen Mittel (13a, 13b, 21a, 21b) Folgendes umfassen: eine Vielzahl von ersten Permanentmagneten (13a, 13b), die zum besagten Stator (3) gehören, und eine Vielzahl von dritten Permanentmagneten (21a, 21b), die zum besagten Rotor (2) gehören,
**dadurch gekennzeichnet, dass** die besagten ersten Permanentmagnete (13a, 13b) und die besagten dritten Permanentmagnete (21a, 21b) derart konfiguriert sind, dass die besagte Stabilisierungskraft bei jeder Drehung des besagten Rotors (2) um die besagte Längsachse (X) einer zyklischen Umkehrung unterworfen wird.

2. Vorrichtung (1) nach Patentanspruch 1, **dadurch gekennzeichnet, dass** der besagte Stator (3) mit zwei ersten Flanschen (5, 6) versehen ist, die gemäß der Richtung der besagten Längsachse (X) einander zugewandt sind, wobei der besagte Rotor (2) mit zwei zweiten Flanschen (17, 18) versehen ist, die derart konfiguriert sind, dass jeder der besagten zwei zweiten Flansche (17, 18) einem entsprechenden der besagten ersten Flansche (5, 6) während der besagten Drehung des besagten Rotors (2) zugewandt ist, wobei die besagten ersten Permanentmagnete (13a, 13b) zu mindestens einem der besagten zwei ersten Flansche (5, 6) gehören, wobei die besagten dritten Permanentmagnete (21a, 21b) zu mindestens einem der besagten zwei zweiten Flansche (17, 18) gehören, die dem besagten mindestens einen der besagten zwei ersten Flansche (5, 6) zugewandt sind.

3. Vorrichtung (1) nach Patentanspruch 2, **dadurch gekennzeichnet, dass** die besagten ersten Permanentmagnete (13a, 13b) und die besagten dritten Permanentmagnete (21a, 21b) derart konfiguriert sind, dass ihre gegenseitige magnetische Interaktion insgesamt eine Abstoßkraft zwischen mindestens einem der besagten zwei ersten Flansche (5, 6) und dem zweiten Flansch (17, 18) erzeugt, der dem besagten mindestens einen der besagten zwei ersten Flansche (5, 6) während mindestens eines entsprechenden Abschnitts jeder Drehung des besagten Rotors (2) zugewandt ist.

4. Vorrichtung (1) nach jeglichem der Patentansprüche 2 oder 3, **dadurch gekennzeichnet, dass** die besagten ersten Permanentmagnete (13a, 13b) und die besagten dritten Permanentmagnete (21a, 21b) derart konfiguriert sind, dass ihre gegenseitige magnetische Interaktion insgesamt eine Anziehungskraft zwischen mindestens einem der besagten zwei ersten Flansche (5, 6) und dem zweiten Flansch (17, 18) erzeugt, der dem besagten mindestens einen der besagten zwei ersten Flansche (5, 6) während mindestens eines entsprechenden Abschnitts jeder Drehung des besagten Rotors (2) zugewandt ist.

5. Vorrichtung (1) nach Patentanspruch 2, **dadurch gekennzeichnet, dass** die besagten ersten Permanentmagnete (13a, 13b) und die besagten dritten Permanentmagnete (21a, 21b) derart konfiguriert sind, dass ihre gegenseitige magnetische Interaktion insgesamt zwischen mindestens einem der besagten zwei ersten Flansche (5, 6) und dem zweiten Flansch (17, 18), der dem besagten mindestens einen der besagten zwei ersten Flansche (5, 6) zugewandt ist, eine Kraft erzeugt, die aufgrund der besagten Drehung des besagten Rotors (2) abwechselnd abstoßend und anziehend ist.

6. Vorrichtung (1) nach jeglichem der Patentansprüche 2 bis 5, **dadurch gekennzeichnet, dass** die besagten ersten Permanentmagnete (13a, 13b) und die besagten dritten Permanentmagnete (21a, 21b) derart konfiguriert sind, dass ihre gegenseitige magnetische Interaktion insgesamt zwischen einem der besagten zwei ersten Flansche (5, 6) und dem zweiten Flansch (17, 18), der dem besagten einen der besagten zwei ersten Flansche (5, 6) zugewandt ist, eine Kraft mit entgegengesetztem Vorzeichen in Bezug auf die gesamte magnetische Kraft erzeugt, die zwischen dem anderen der besagten zwei ersten Flansche (5, 6) und dem anderen der besagten zweiten Flansche (17, 18) für einen beliebigen Drehwinkel des besagten Rotors (2) erzeugt wird.

7. Vorrichtung (1) nach Patentanspruch 6, **dadurch gekennzeichnet, dass** die besagten ersten Permanentmagnete (13a, 13b) an jedem der besagten ersten Flansche (5, 6) eine entsprechende Abfolge von Polaritäten mit wechselnden Vorzeichen definieren, die in gleichmäßigen Winkelabständen um die besagte Längsachse (X) gemäß einem ersten Kreisring angeordnet sind, und dass die besagten dritten Permanentmagnete (21a, 21b) jedes der besagten zweiten Flansche (17, 18) eine entsprechende Abfolge von Polaritäten mit dem gleichen Vorzeichen definieren, die in gleichmäßigen Winkelabständen um die besagte Längsachse (X) gemäß einem zweiten Kreisring angeordnet sind, wobei die Breiten der besagten Winkelabstände des besagten zweiten Kreisrings doppelt so breit sind wie die Winkelabstände des besagten ersten Kreisrings.

8. Vorrichtung (1) nach jeglichem der Patentansprüche 2 bis 7, **dadurch gekennzeichnet, dass** die besagten ersten Flansche (5, 6) entsprechende Löcher (8a, 8b) aufweisen, die jeweilige Sicherheitslager (9a, 9b) unterbringen, die mit entsprechenden Sitzen versehen sind, wobei der besagte Rotor (2) zwei Endabschnitte (12a, 12b) umfasst, die gemäß der Richtung der besagten Längsachse (X) einander gegenüberliegen und koaxial zu dieser sind, wobei die besagten Endabschnitte (12a, 12b) mit Spiel jeweils in den besagten Sitzen derart untergebracht sind, dass verhindert wird, dass die besagten Endabschnitte (12a, 12b) die besagten Sitze während des Normalbetriebs der besagten Vorrichtung (1) berühren, wobei gleichzeitig die Verschiebung des besagten Rotors (2) relativ zum besagten Stator (3) begrenzt wird, wobei die besagten Endabschnitte (12a, 12b) entsprechende scharfe Enden aufweisen, wobei in den besagten Löchern (8a, 8b) entsprechende Sicherheitskapseln (11a, 11b) untergebracht sind, in denen die besagten scharfen Enden im Falle einer übermäßigen Verschiebung des besagten Rotors (2) relativ zum besagten Stator (3) eindringen können.

9. Vorrichtung (1) nach jeglichem der Patentansprüche 2 bis 8, **dadurch gekennzeichnet, dass** der besagte Stator (3) ein inertes Einschließungsgehäuse (4) umfasst, das wiederum eine rohrförmige Metallhülle (7) umfasst, dessen Enden jeweils den besagten zwei ersten Flanschen (5, 6) abdichtend zugeordnet sind, wobei das besagte Einschließungsgehäuse (4) eine erste Außenschicht (16) aus massivem Material umfasst, die außerhalb der besagten rohrförmigen Metallhülle (7) angeordnet ist.

10. Vorrichtung nach Patentanspruch 9, **dadurch gekennzeichnet, dass** die besagte erste Außenschicht (16) und die besagte rohrförmige Metallhülle (7) einen Spalt definieren, der eine Substanz enthält, z. B. viskoses Öl oder Sand, die dazu geeignet ist, die kinetische Energie des besagten Rotors (2) im Falle einer Panne abzubauen.

11. Vorrichtung (1) nach jeglichem der Patentansprüche 2 bis 10, **dadurch gekennzeichnet, dass** der besagte Rotor (2) ein zylindrisches Verbindungsrohr (19), dessen Enden jeweils den besagten zwei zweiten Flanschen (17, 18) zugeordnet sind, und eine Beschichtung (20) aus Verbundmaterial umfasst.

12. Vorrichtung (1) nach jeglichem der Patentansprüche 1 bis 11, **dadurch gekennzeichnet, dass** die besagten ersten magnetischen Mittel (15a, 15b, 22a, 22b) Folgendes definieren:
- einen ersten Ring (15a, 15b), der zum besagten Stator (3) gehört und koaxial zur besagten Längsachse (X) ist;
- einen zweiten Ring (22a, 22b), der zum besagten Rotor (2) gehört und konzentrisch zum besagten ersten Ring ist;
wobei die einander zugewandten Oberflächen des besagten ersten Rings und des besagten zweiten Rings die gleichen magnetischen Polaritäten aufweisen, wobei der besagte erste Ring eine Vielzahl von Abschnitten mit zueinander gleichen Winkelbreiten umfasst und auf den besagten zweiten Ring jeweilige magnetische Kräfte mit voneinander verschiedenen Stärken derart ausübt, dass die resultierende Stützkraft das Gewicht des besagten Rotors (2) kompensiert, wenn die besagte Längsachse (X) horizontal angeordnet ist.

13. Vorrichtung (1) nach jeglichem der Patentansprüche 1 bis 12, **dadurch gekennzeichnet, dass** der besagte Stator (3) eine Vielzahl von Spulen (14a, 14b) umfasst, die auf einem Ring um die besagte Längsachse (X) angeordnet sind, um die Bewegung des besagten Rotors (2) zu induzieren, wobei der besagte Rotor (2) fünfte Permanentmagnete (23a, 23b) umfasst, die auf einem Ring um die besagte Längsachse (X) angeordnet sind, um den besagten Spulen (14a, 14b) zugewandt zu sein, und eine Abfolge von wechselnden Polaritäten definieren, wobei die besagten Spulen (14a, 14b) mit den besagten fünften Permanentmagneten (23a, 23b) zusammenwirken, um die besagte Drehung des besagten Rotors (2) zu bewirken.

14. Vorrichtung (1) nach Patentanspruch 13, **dadurch gekennzeichnet, dass** die besagte Vorrichtung (1) gemäß Patentanspruch 2 ist, **und dass** eine erste Gruppe der besagten Spulen (14a) zu einem der besagten ersten Flansche (5, 6) gehört und die verbleibende Gruppe der besagten Spulen (14b) zum anderen der besagten ersten Flansche (5, 6) gehört, wobei eine erste Gruppe der besagten fünften Permanentmagnete (23a) zu einem der besagten zweiten Flansche (17, 18) gehört und die verbleibende Gruppe der besagten fünften Permanentmagnete (23b) zum anderen der besagten zweiten Flansche (17, 18) gehört, wobei eine Steuereinheit vorgesehen ist, um die besagte erste Gruppe von Spulen (14a) und die besagte verbleibende Gruppe von Spulen (14b) auf eine voneinander verschiedene Weise zu betreiben, um eine Instabilität auf dem besagten Rotor (2) zu kompensieren, wobei die besagte Vorrichtung (1) ferner eine Erfassungsvorrichtung umfasst, um die Position des besagten Rotors (2) in Bezug auf den besagten Stator (3) gemäß der besagten Längsachse (X) zu erfassen, wobei die besagte Steuereinheit konfiguriert ist, um die besagten Gruppen von Spulen (14a, 14b) auf voneinander verschiedene Weisen basierend auf der Ablesung der besagten Erfassungsvorrichtung zu betreiben.

15. Vorrichtung (1) nach jeglichem der vorhergehenden Patentansprüche, **dadurch gekennzeichnet, dass** jeder der besagten ersten Permanentmagnete (13a, 13b) und jeder der besagten dritten Permanentmagnete (21a, 21b) derart angeordnet ist, dass seine zwei entsprechenden Magnetpole gemäß einer Richtung parallel zur besagten Längsachse (X) zueinander ausgerichtet sind.

## Revendications

1. Dispositif (1) de stockage d'énergie dynamique comprenant :
- un stator (3) de forme généralement cylindrique définissant un axe longitudinal (X) ;
- un rotor (2) contraint magnétiquement audit stator (3) de manière à pouvoir tourner selon ledit axe longitudinal (X) ;
- des premiers moyens magnétiques (15a, 15b, 22a, 22b) appartenant audit rotor (2) et audit stator (3), configurés pour interagir magnétiquement entre eux de manière à générer, dans leur ensemble, une force de soutien dirigée orthogonalement audit axe longitudinal (X) pour soutenir ledit rotor (2) lors de sa rotation autour dudit axe longitudinal (X) lorsque ledit axe longitudinal (X) est disposé horizontalement ;
- des deuxièmes moyens magnétiques (13a, 13b, 21a, 21b) appartenant audit rotor (2) et audit stator (3), configurés pour interagir magnétiquement entre eux de manière à générer sur ledit rotor (2), dans leur ensemble, une force de stabilisation parallèle audit axe longitudinal (X) ;
où lesdits deuxièmes moyens magnétiques (13a, 13b, 21a, 21b) comprennent une pluralité de premiers aimants permanents (13a, 13b) appartenant audit stator (3) et une pluralité de troisièmes aimants permanents (21a, 21b) appartenant audit rotor (2),
**caractérisé en ce que** lesdits premiers aimants permanents (13a, 13b) et lesdits troisièmes aimants permanents (21a, 21b) sont configurés de telle sorte que ladite force stabilisatrice est soumise à une inversion cyclique lors de chaque rotation dudit rotor (2) autour dudit axe longitudinal (X).

2. Dispositif (1) selon la revendication 1, **caractérisé en ce que** ledit stator (3) est pourvu de deux premières brides (5, 6), tournées mutuellement l'une vers l'autre selon la direction dudit axe longitudinal (X), ledit rotor (2) étant pourvu de deux deuxièmes brides (17, 18) configurées de telle sorte que chacune desdites deux deuxièmes brides (17, 18) soit tournée vers une bride correspondante desdites premières brides (5, 6) lors de ladite rotation dudit rotor (2), lesdits premiers aimants permanents (13a, 13b) appartenant à au moins une desdites deux premières brides (5, 6), lesdits troisièmes aimants permanents (21a, 21b) appartenant à au moins l'une desdites deux deuxièmes brides (17, 18) tournée vers ladite au moins l'une desdites deux premières brides (5, 6).

3. Dispositif (1) selon la revendication 2, **caractérisé en ce que** lesdits premiers aimants permanents (13a, 13b) et lesdits troisièmes aimants permanents (21a, 21b) sont configurés de telle sorte que leur interaction magnétique mutuelle génère dans son ensemble une force répulsive entre au moins l'une desdites deux premières brides (5, 6) et la deuxième bride (17, 18) tournée vers ladite au moins l'une desdites deux premières brides (5, 6) pendant au moins une portion correspondante de chaque rotation dudit rotor (2).

4. Dispositif (1) selon l'une quelconque des revendications 2 ou 3, **caractérisé en ce que** lesdits premiers aimants permanents (13a, 13b) et lesdits troisièmes aimants permanents (21a, 21b) sont configurés de telle sorte que leur interaction magnétique mutuelle génère dans son ensemble une force d'attraction entre au moins l'une desdites deux premières brides (5, 6) et la deuxième bride (17, 18) tournée vers ladite au moins l'une desdites deux premières brides (5, 6) pendant au moins une portion correspondante de chaque rotation dudit rotor (2).

5. Dispositif (1) selon la revendication 2, **caractérisé en ce que** lesdits premiers aimants permanents (13a, 13b) et lesdits troisièmes aimants permanents (21a, 21b) sont configurés de telle sorte que leur interaction magnétique mutuelle génère dans son ensemble, entre au moins l'une desdites deux premières brides (5, 6) et la deuxième bride (17, 18) tournée vers ladite au moins l'une desdites deux premières brides (5, 6), une force alternativement répulsive et attractive due à ladite rotation dudit rotor (2).

6. Dispositif (1) selon l'une quelconque des revendications 2 à 5, **caractérisé en ce que** lesdits premiers aimants permanents (13a, 13b) et lesdits troisièmes aimants permanents (21a, 21b) sont configurés de telle sorte que leur interaction magnétique mutuelle génère dans son ensemble, entre l'une desdites deux premières brides (5, 6) et la deuxième bride (17, 18) tournée vers ladite l'une desdites deux premières brides (5, 6), une force de signe opposé par rapport à la force magnétique totale générée entre l'autre desdites deux premières brides (5, 6) et l'autre desdites deuxièmes brides (17, 18), pour tout angle de rotation dudit rotor (2).

7. Dispositif (1) selon la revendication 6, **caractérisé en ce que** lesdits premiers aimants permanents (13a, 13b) définissent, sur chacune desdites premières brides (5, 6), une succession correspondante de polarités ayant des signes alternés disposées à intervalles angulaires uniformes autour dudit axe longitudinal (X) selon un premier anneau, et **en ce que** lesdits troisièmes aimants permanents (21a, 21b) de chacune desdites deuxièmes brides (17, 18) définissent une succession correspondante de polarités ayant le même signe disposées à des intervalles angulaires uniformes autour dudit axe longitudinal (X) selon un deuxième anneau, lesdits intervalles angulaires dudit deuxième anneau ayant des largeurs deux fois plus grandes que les intervalles angulaires dudit premier anneau.

8. Dispositif (1) selon l'une quelconque des revendications 2 à 7, **caractérisé en ce que** lesdites premières brides (5, 6) présentent des trous correspondants (8a, 8b) logeant des roulements de sécurité respectifs (9a, 9b) pourvus de sièges correspondants, ledit rotor (2) comprenant deux parties d'extrémité (12a, 12b) mutuellement opposées selon la direction dudit axe longitudinal (X) et coaxiales à celui-ci, lesdites parties d'extrémité (12a, 12b) étant logées avec du jeu dans, respectivement, dans lesdits sièges de manière à empêcher que lesdites parties d'extrémité (12a, 12b) entrent en contact avec lesdits sièges pendant le fonctionnement normal dudit dispositif (1), limitant en même temps le déplacement dudit rotor (2) par rapport audit stator (3), lesdites parties d'extrémité (12a, 12b) ayant des extrémités pointues correspondantes, dans lesdits trous (8a, 8b) étant logées des capsules de sécurité correspondantes (11a, 11b) dans lesquelles lesdites extrémités pointues peuvent pénétrer en cas de déplacement excessif dudit rotor (2) par rapport audit stator (3).

9. Dispositif (1) selon l'une quelconque des revendications 2 à 8, **caractérisé en ce que** ledit stator (3) comprend un boîtier de confinement inerte (4) qui, à son tour, comprend une enveloppe métallique tubulaire (7) dont les extrémités sont associées de manière étanche, respectivement, auxdites deux premières brides (5, 6), où ledit boîtier de confinement (4) comprend une première couche extérieure (16) en matériau massif disposée à l'extérieur de ladite enveloppe métallique tubulaire (7).

10. Dispositif selon la revendication 9, **caractérisé en ce que** ladite première couche extérieure (16) et ladite enveloppe métallique tubulaire (7) définissent un espace contenant une substance, par exemple de l'huile visqueuse ou du sable, apte à dissiper l'énergie cinétique dudit rotor (2) en cas de panne.

11. Dispositif (1) selon l'une quelconque des revendications 2 à 10, **caractérisé en ce que** ledit rotor (2) comprend un tube de connexion cylindrique (19) dont les extrémités sont associées, respectivement, auxdites deux deuxièmes brides (17, 18), et un revêtement (20) en matériau composite.

12. Dispositif (1) selon l'une quelconque des revendications 1 à 11, **caractérisé en ce que** lesdits premiers moyens magnétiques (15a, 15b, 22a, 22b) définissent :
- un premier anneau (15a, 15b) appartenant audit stator (3) et coaxial audit axe longitudinal (X) ;
- un deuxième anneau (22a, 22b) appartenant audit rotor (2) et concentrique audit premier anneau ;
les surfaces tournées mutuellement l'une vers l'autre dudit premier anneau et dudit deuxième anneau ayant les mêmes polarités magnétiques, ledit premier anneau comprenant une pluralité de portions ayant des largeurs angulaires mutuellement égales et exerçant, sur ledit deuxième anneau, des forces magnétiques respectives ayant des magnitudes mutuellement différentes, de telle sorte que la force de support qui en résulte compense le poids dudit rotor (2) lorsque ledit axe longitudinal (X) est disposé horizontalement.

13. Dispositif (1) selon l'une quelconque des revendications 1 à 12, **caractérisé en ce que** ledit stator (3) comprend une pluralité de bobines (14a, 14b) disposées sur un anneau autour dudit axe longitudinal (X) pour induire le mouvement sur ledit rotor (2), ledit rotor (2) comprenant des cinquièmes aimants permanents (23a, 23b) disposés sur un anneau autour dudit axe longitudinal (X) de manière à être tournés vers lesdites bobines (14a, 14b) et définissant une succession de polarités alternées, lesdites bobines (14a, 14b) coopérant avec lesdits cinquièmes aimants permanents (23a, 23b) pour conférer ladite rotation audit rotor (2).

14. Dispositif (1) selon la revendication 13, **caractérisé en ce que** ledit dispositif (1) est conforme à la revendication 2, et **en ce qu'**un premier groupe desdites bobines (14a) appartient à l'une desdites premières brides (5, 6) et le groupe restant desdites bobines (14b) appartient à l'autre desdites premières brides (5, 6), un premier groupe desdits cinquièmes aimants permanents (23a) appartenant à l'une desdites deuxièmes brides (17, 18), le groupe restant desdits cinquièmes aimants permanents (23b) appartenant à l'autre desdites deuxièmes brides (17, 18), une unité de commande étant prévue pour faire fonctionner ledit premier groupe de bobines (14a) et ledit groupe restant de bobines (14b) d'une manière mutuellement différente pour compenser l'instabilité sur ledit rotor (2), ledit dispositif (1) comprenant en outre un dispositif de détection pour détecter la position dudit rotor (2) par rapport audit stator (3) selon ledit axe longitudinal (X), ladite unité de commande étant configurée pour faire fonctionner lesdits groupes de bobines (14a, 14b) de manières mutuellement différentes sur la base de la lecture dudit dispositif de détection.

15. Dispositif (1) selon toute revendication précédente, **caractérisé en ce que** chacun desdits premiers aimants permanents (13a, 13b) et chacun desdits troisièmes aimants permanents (21a, 21b) est disposé de manière à ce que ses deux pôles magnétiques correspondants soient mutuellement alignés selon une direction parallèle audit axe longitudinal (X).
